# EUROPÄISCHE PATENTSCHRIFT

(11) **EP 2 262 406 B1**
(45) Veröffentlichungstag und Bekanntmachung des Hinweises auf die Patenterteilung: **05.12.2018**
(21) Anmeldenummer: 09725716.6
(22) Anmeldetag: 24.03.2009
(51) Int. Cl.: A47L 15/42, D06F 39/00, A47B 77/02, F16B 12/26

(54) **HAUSHALTSSTANDGERÄT**
FREESTANDING DOMESTIC APPLIANCE
APPAREIL MÉNAGER SUR PIED

(30) Priorität: 27.03.2008 DE 102008015944
(43) Veröffentlichungstag der Anmeldung: 22.12.2010
(73) Patentinhaber: BSH Hausgeräte GmbH, 81739 München (DE)
(72) Erfinder: FETZER, Gerhard, 89423 Gundelfingen (DE); DIEBOLD, Steffen, 89568 Hermaringen (DE); TANER, Mustafa, 89415 Lauingen (DE)
(86) Internationale Anmeldenummer: PCT/EP2009/053429
(87) Internationale Veröffentlichungsnummer: WO 2009/118309

(56) Entgegenhaltungen:
- EP-A- 1 529 873
- EP-A- 1 710 341
- WO-A-2005/124008
- DE-A1- 4 446 961
- DE-C1- 19 843 228
- US-A1- 2005 178 163

## Beschreibung

Die Erfindung betrifft ein Haushaltsstandgerät, insbesondere eine Geschirrspülmaschine, mit einem Behandlungsbehälter sowie einem Kraftaufnehmerelement, welches von außen auf das Haushaltsstandgerät ausgeübte Klammerkräfte in das Haushaltsstandgerät einleitet, auf dem oberseitig eine Tischplatte angeordnet ist, wobei die Tischplatte und/oder die Befestigung der Tischplatte an dem Haushaltsstandgerät das Kraftaufnehmerelement bildend ausgeführt sind, in das die Klammerkräfte einleitbar sind, und wobei die Tischplatte über beabstandete Befestigungspunkte auf dem Haushaltsstandgerät befestigt ist.

Der Transport beziehungsweise das Stapeln von Haushaltsstandgeräten wie zum Beispiel Geschirrspülmaschinen, Waschmaschinen, Wäschetrocknern, Öfen oder Kühlschränken kann werksseitig mittels eines sogenannten Klammerstaplers erfolgen. Dieser bringt von außen Klammerkräfte auf gegenüberliegende Gehäuseseiten des Haushaltsstandgeräts auf.

Um hierbei Transportschäden, wie etwa Deformationen, an den Gehäuseseiten beispielsweise einer Geschirrspülmaschine zu vermeiden, sind in einer Geschirrspülmaschine zwischen den Gehäuseseitenwänden und gegenüberliegenden Behälterwänden des Behandlungsbehälters Kraftaufnehmerelemente vorgesehen, über die die Klammerkräfte in den Behandlungsbehälter eingeleitet werden. Eine gegebenenfalls vorgesehene oberseitige Tischplatte befindet sich demgegenüber außerhalb des Kraftpfads der eingeleiteten Klammerkräfte.

Die Druckschrift WO 2005/124008 A1 offenbart eine Waschmaschine mit einem Gehäusedeckel. Der Gehäusedeckel ist in den vier Eckbereichen über Befestigungspunkte mit den vier Gehäusewänden der Waschmaschine verbunden. Zudem ist auf der Unterseite des Gehäusedeckels ein Träger vorgesehen, der über mehrere Abstützpunkte an dem Gehäusedeckel befestigt ist. Der Träger ist mit seinen Enden an gegenüberliegenden seitlichen Gehäusewänden der Waschmaschine befestigt.

Die Druckschrift DE 198 43 228 C1 offenbart ist ein Haushaltsgerät mit einem Gehäusedeckel. Bei dem als Waschmaschine ausgeführten Haushaltsgerät weist der Gehäusedeckel einen Außenrahmen auf, in den eine Platte eingelegt ist. Der Außenrahmen des Gehäusedeckels ist in den vier Eckbereichen über Befestigungsmittel mit einem Gehäuserahmenrand des Haushaltsgeräts, welcher aus den vier Seitenwänden des Haushaltsgeräts gebildet ist, verbunden.

Die Druckschrift US 2005/0178163 A1 offenbart eine Waschmaschine mit einem Gehäusedeckel, wobei der Gehäusedeckel eine Platte mit einem umlaufenden Außenrahmen aufweist. Der Außenrahmen dient zur Versteifung der Platte und ist in vier Eckbereichen mit dem Gehäuse der Waschmaschine, welcher aus den vier Seitenwänden des Haushaltsgeräts gebildet ist, verbunden.

Die Aufgabe der Erfindung besteht darin, ein Haushaltsstandgerät bereitzustellen, das mit geringem Bauteilaufwand den Klammerkräften beim Transportieren oder Stapeln standhält.

Die Aufgabe ist durch die Merkmale des Patentanspruchs 1 gelöst. Bevorzugte Weiterbildungen der Erfindung sind in den abhängigen Patentansprüchen offenbart.

Gemäß dem kennzeichnenden Teil des Patentanspruchs 1 ist der Abstand der Befestigungspunkte in einer Wirkrichtung der Klammerkräfte derart eingestellt, dass die durch die Klammerkräfte erzeugte Druckspannung in der Tischplatte kleiner ist als eine kritische Druckspannung, bei der ein Knicken der Tischplatte in einem unelastischen Bereich erfolgt und dass die Tischplatte mit vorderen Befestigungspunkten an einem frontseitigen Rahmen des Behandlungsbehälters und mit hinteren Befestigungspunkten an einem zweiten Abschnitt des Behandlungsbehälters angeordnet ist.

Bei der Beaufschlagung des Haushaltsstandgeräts mit Klammerkräften befindet sich daher die Tischplatte in dem Kraftpfad der Klammerkräfte. Zusätzliche Kraftaufnehmerelemente zur Durchleitung der Klammerkräfte können daher im Sinne einer Bauteilreduzierung weggelassen werden.

Die erfindungsgemäße Tischplatte ist im Hinblick auf die Beaufschlagung mit den Klammerkräften ausgelegt. Für eine besonders einfache Auslegung der Tischplatte im Hinblick auf die Einleitung der Klammerkräfte in das Haushaltsstandgerät sind die Befestigungspunkte der Tischplatte zur Befestigung an dem Haushaltsstandgerät von Bedeutung.. Eine derartige Auslegung der Befestigungspunkte kann vorteilhaft mittels einer herkömmlichen Tischplatte erfolgen, bei der lediglich der Befestigungspunkt-Abstand eingestellt wird. Eine zusätzliche Anpassung der Tischplatte mit Bezug auf das Plattenmaterial oder die Plattengeometrie ist hier nicht erforderlich.

Vor diesem Hintergrund kann in einem Verfahren zur Auslegung der Tischplatte zunächst auf der Grundlage der mittels der Klammerkräfte in die Tischplatte eingebrachten Druckspannung eine kritische Knicklänge zwischen den betreffenden Befestigungspunkten ermittelt werden, bei der die Tischplatte ausknickt. Bei einer Auslegung des Befestigungspunkt-Abstands kleiner als die kritische Knicklänge kann somit das Ausknicken bei der eingebrachten Klammerspannung verhindert werden. Bevorzugt sind hierbei die Befestigungspunkte der Tischplatte von deren Seitenrand um ein entsprechendes Versatzmaß nach innen versetzt.

Auf Grund seiner inneren Formstabilität eignet sich der Behandlungsbehälter des Haushaltsstandgeräts zur Einleitung der seitlichen Klammerkräfte.

Um einen entsprechenden Kräftepfad von der Tischplatte in den Behandlungsbehälter bereitzustellen, kann die Tischplatte mit ihren hinteren Befestigungspunkten an einem rückseitigen Verbindungsflansch zwischen einer Deckwand und einer Rückwand des Behandlungsbehälters angeordnet sein.

Bei einem einfachen Montagevorgang zur Befestigung der Tischplatte auf das Haushaltsstandgerät kann die Tischplatte in einer Schräglage auf das Haushaltsstandgerät gesetzt und entsprechend vorpositioniert werden. Anschließend kann die schräg gestellte Tischplatte in eine horizontale Gebrauchslage auf das Haushaltsstandgerät geschwenkt werden und dort beispielsweise verrasten. Für diesen Montagevorgang kann die Tischplatte als Befestigungspunkte Anlenkelemente, etwa Einhängehaken, aufweisen, mit deren Hilfe die Tischplatte schwenkbar an dem Haushaltsstandgerät anlenkbar ist. Auf der gegenüberliegenden Randseite kann die Tischplatte Rastelemente aufweisen, die nach der Vorpositionierung der Tischplatte durch Schwenkbewegung derselben in Rasteingriff mit dem Haushaltsstandgerät bringbar ist.

Bevorzugt ist es, wenn die Anlenkelemente zum Vorpositionieren der Tischplatte geräterückseitig an dem Verbindungsflansch des Behandlungsbehälters eingreifen, und die Rastelemente gerätefrontseitig mit dem Frontrahmen des Behandlungsbehälters verrastet werden. Dadurch ist eine einfache Montage der Tischplatte von vorne ermöglicht. Entsprechend kann in der Fertigungslinie die Bereitstellung von Tischplatten von vorne erfolgen und ist keine Sonderbeschickung von hinten erforderlich.

Für eine lagerichtige Positionierung der Tischplatte können den Rastelementen Positionierdorne zugeordnet sein. Diese können bei der Schwenkbewegung der vormontierten, schräggestellten Tischplatte in deren Gebrauchslage in eine korrespondierende Positionieröffnung formschlüssig einragen. Bevorzugt sind die Positionierdorne in dem vorderen Bereich des Haushaltsstandgeräts angeordnet, damit die Tischplatte zur frontseitigen Bedienblende ausgerichtet werden kann.

Bei der oben erwähnten Vormontage der Tischplatte, die in Schräglage auf die Oberseite des Haushaltsstandgeräts gesetzt wird, sind Beschädigungen der Gehäuseseitenwände beziehungsweise der Kanten der Tischplatte zu vermeiden. Hierzu können seitliche Auflageleisten an der Unterseite der Tischplatte vorgesehen werden. Somit liegt die Tischplatte bei der Vormontage nicht unmittelbar, sondern über die seitlichen Auflageleisten auf oberen Gehäusekanten des Haushaltsstandgeräts.

Außerdem kann jedes der Rastelemente einen Betätigungshebel aufweisen, bei dessen Betätigung das Rastelement werkzeugfrei in eine Entriegelungsstellung bringbar ist. Für eine einfach manuelle Betätigung ist es von Vorteil, wenn der Betätigungshebel des Rastelements zu einer Randseite der Tischplatte ragt.

Die Befestigungselemente der Tischplatte, etwa die Anlenkelemente und/oder die Rastelemente können bevorzugt voneinander separate Bauteile sein. In diesem Fall können in einfacher Weise die Anlenkelemente beziehungsweise die Rastelemente entlang einer oberen Rahmenleiste des Frontrahmens beziehungsweise entlang des rückseitigen Verbindungsflanschs in ihrer Position eingestellt werden, um einen, entsprechend der kritischen Knickspannung der Tischplatte ausgelegten Befestigungspunkt-Abstand zu erhalten.

Die Anlenkelemente beziehungsweise Rastelemente können bevorzugt insgesamt ausreichend nachgiebig gestaltet sein, um Maßtoleranzen ausgleichen zu können. Derart "weich" gestaltete Befestigungspunkte können darüber hinaus beim Umfallen des Haushaltsstandgeräts eingeleitete Aufprallkräfte abbauen.

Ferner kann vorzugsweise vorgesehen sein, dass die Tischplatte Versteifungsmittel aufweist.

Dabei ist vorzugsweise vorgesehen, dass die Versteifungsmittel wenigstens zwischen zwei Befestigungspunkten angeordnet sind, über die die Tischplatte an dem Haushaltsstandgerät befestigt ist. Das heißt, die Versteifungsmittel sind lediglich in Bereichen hoher mechanischer Belastung angeordnet.

Schließlich ist vorzugsweise vorgesehen, dass das Versteifungsmittel in dem Inneren der Tischplatte oder an einer Außenfläche der Tischplatte angeordnet ist. Das heißt, dass Versteifungsmittel kann in einer Nut der Tischplatte eingesetzt sein, die beispielsweise an der Unterseite der Tischplatte angeordnet ist oder alternativ kann die Tischplatte auf die Unterseite der Tischplatte aufgesetzt und mit ihr verbunden sein. Dabei kann das Versteifungsmittel beispielsweise aus Metall oder Kunststoff gefertigt sein und beispielsweise eine im Wesentlichen stabförmige oder rechteckförmige Gestalt aufweisen.

Nachfolgend ist ein Ausführungsbeispiel der Erfindung anhand der beigefügten Figuren beschrieben.

Es zeigen:
- Fig. 1: in einer perspektivischen Teilansicht von vorne eine teilmontierte Geschirrspülmaschine mit einer auf dem Behandlungsbehälter montierten Tischplatte;
- Fig. 2: in einer der Fig. 1 entsprechenden Ansicht den freigelegten Behandlungsbehälter;
- Fig. 3: in einer perspektivischen Ansicht die Unterseite der Tischplatte;
- Fig. 4 und Fig. 5: einen Montagevorgang zur Befestigung der Tischplatte; und

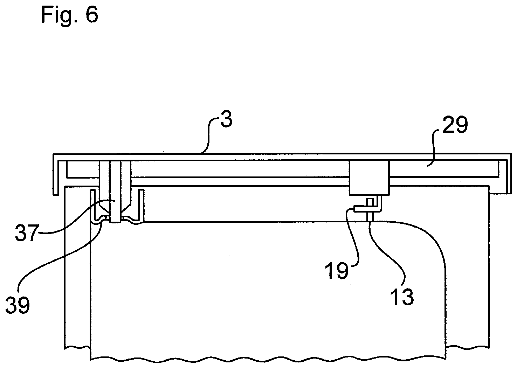

- Fig. 6: in einer der Fig. 4 und 5 entsprechenden Ansicht einen Positionierdorn der Tischplatte.

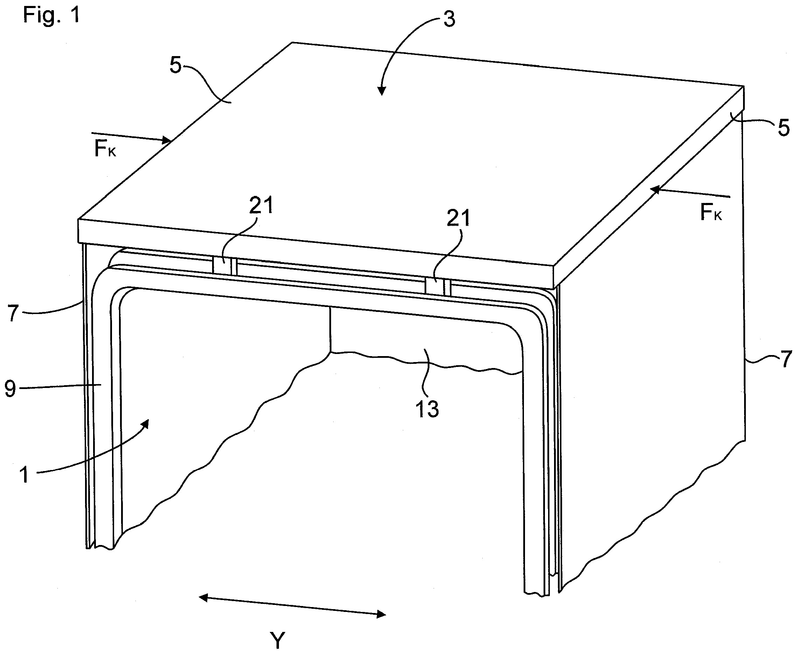

Im vorliegenden Ausführungsbeispiel ist für ein Haushaltsstandgerät in der Fig. 1 eine teilmontierte Geschirrspülmaschine mit einem frontseitig offenen Behandlungsbehälter 1 sowie einer darauf angeordneten Tischplatte 3 gezeigt. Die Tischplatte 3 umgreift mit ihren beiden schmalen Randseiten 5 die Oberkanten der Gehäuseseitenwände 7. Die Beschickungsöffnung des Behandlungsbehälters 1 ist in bekannter Weise von einem frontseitigen Rahmen 9 begrenzt, der in seinem Querschnitt mit einem nach außen offenen U-Profil versehen ist.

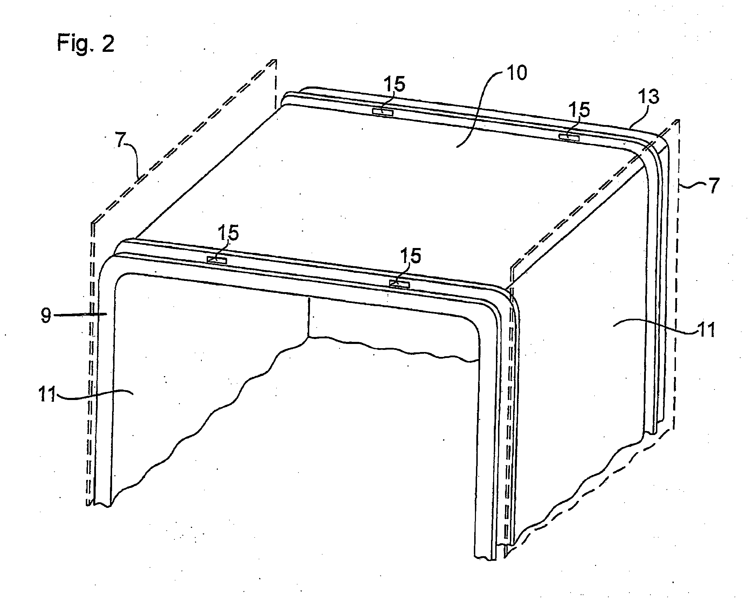

Der Behandlungsbehälter 1 kann gemäß der Fig. 2 beispielhaft einen kastenförmigen, ringartig geschlossenen Blechmantel mit rechteckigem Querschnitt aufweisen, der eine Deckwand 10, die beiden Seitenwände 11 sowie eine nicht gezeigte Bodenwand des Behandlungsbehälters 1 bildet. Die beiden Gehäuseseitenwände 7 sind aus Gründen der Übersichtlichkeit lediglich gestrichelt angedeutet.

An seiner Rückseite ist der kastenförmige Blechmantel durch eine in etwa wannenförmig ausgebildete Rückwand 13 geschlossen. Die Rückwand 13 weist davon abgewinkelte Seitenränder mit einem Verbindungsflansch 14 auf, der in bekannter Weise mit entsprechenden Verbindungsflanschen 14 an dem Blechmantel verschweißt ist.

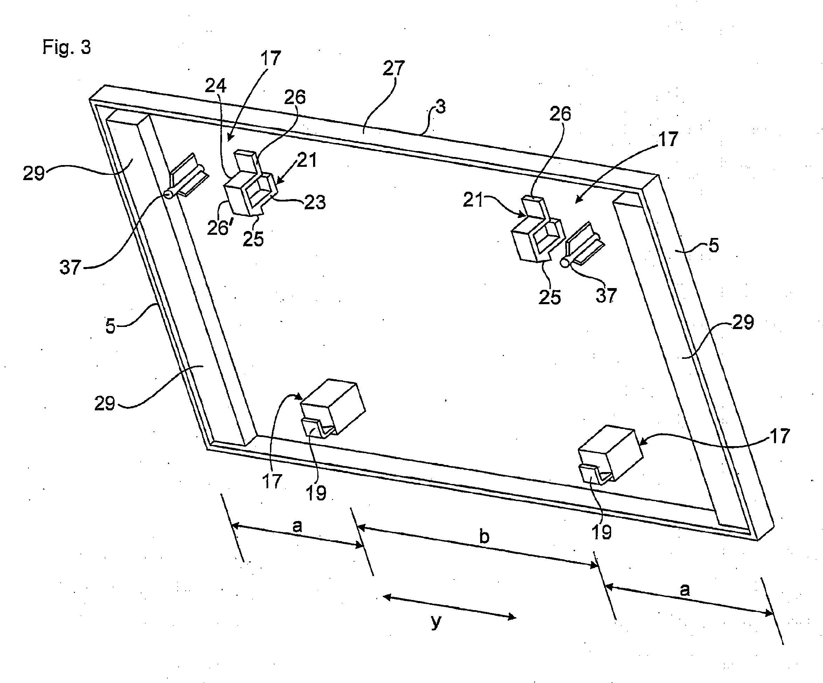

Wie aus der Fig. 2 weiter hervorgeht, sind an dem innenliegenden Schenkel des U-profilförmigen Frontrahmens 6 sowie an dem Verbindungsflansch 14 der Deckwand 10 Ausnehmungen 15 vorgesehen, in die die Tischplatte 3 eingehängt beziehungsweise verrastet werden kann. Hierzu weist die Tischplatte 3 gemäß der Fig. 3 an ihrer Unterseite Befestigungspunkte 17 auf. Die beiden geräterückseitigen Befestigungspunkte 17 sind hier beispielhaft Einhängehaken 19, die über entsprechende Sockel an der Tischplatte 3 befestigt sind. Die beiden vorderen Befestigungspunkte 17 der Tischplatte 3 weisen demgegenüber Rastelemente 21 auf, deren Rastvorsprünge 25 den beiden hinteren Einhängehaken 19 zugewandt sind.

Jedes der Rastelemente 21 ist als ein U-förmiges Kunststoffprofilteil mit zwei U-Schenkeln 23, 24 ausgebildet. Der erste U-Schenkel 23 des Rastelements 21 ist an seinem abgewinkelten Ende fest mit der Unterseite der Tischplatte 3 in Verbindung. An seiner, dem Einhängehaken 19 zugewandten Seite weist der U-Schenkel 23 den Rastvorsprung 25 auf und ist über einen Steg 26' mit dem zweiten U-Schenkel 24 in Verbindung. Der zweite U-Schenkel 24 ist mit seinem abgewinkelten Ende 26 frei bewegbar gegenüber der Tischplatte 3 angeordnet. Das abgewinkelte Ende 26 ragt in Richtung des vorderen Seitenrands 27 der Tischplatte 3. Wie später beschrieben wird, kann in Gebrauchslage der Tischplatte 3 der vordere Seitenrand 27 der Tischplatte 3 untergriffen und durch Betätigung des abgewinkelten Endes 26 das Rastelement 21 aus seiner Verriegelungsposition gebracht werden.

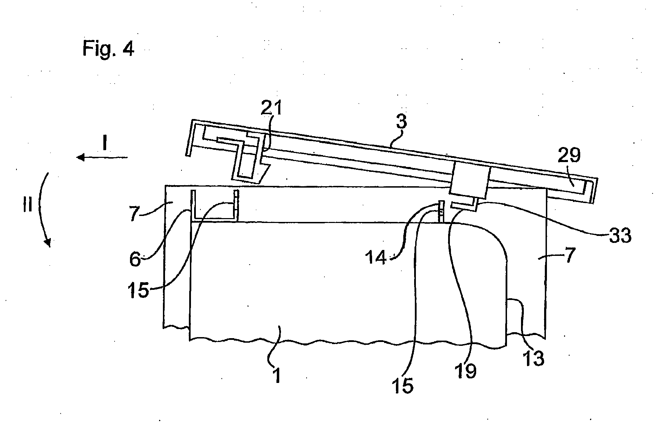

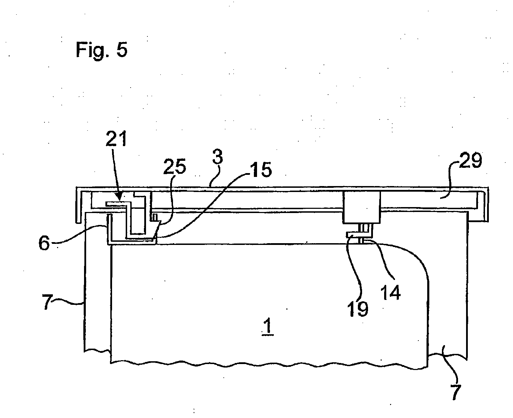

In den Fig. 4 und 5 ist der Montagevorgang zur Befestigung der Tischplatte 3 auf der Geschirrspülmaschine gezeigt. Demzufolge wird die Tischplatte 3 in Schrägstellung mit ihrer rückwärtigen Seite auf obere Kanten der Gehäuseseitenwände 7 aufgelegt. Um hierbei eine Beschädigung der Gehäuseseitenwände 7 während des Montagevorgangs zu vermeiden, sind an der Unterseite der Tischplatte 3 seitliche Auflagerippen 29 vorgesehen. In der in Fig. 4 gezeigten Schräglage liegt daher die Tischplatte 3 nicht unmittelbar auf den Gehäuseseitenwänden 7 auf, sondern unter Zwischenschaltung der beiden Auflagerippen 29. Die Auflagerippen 29 verhindern somit eine Beschädigung der Gehäuseseitenwände 7 während der Tischmontage. Außerdem ermöglichen die Auflagerippen 29 eine Auflage der Tischplatte über einen größeren Bereich, so dass die Tischplatten-Montage auch für ungeübte Montierer durchführbar ist. Die aufgelegte Tischplatte 3 wird dann in der Montagerichtung I nach vorne gezogen, wodurch die beiden hinteren Einhängehaken 19 durch die Ausnehmungen 15 des hinteren Verbindungsflanschs 14 geführt werden, bis Endanschläge 33 der Einhängehaken 19 an den Verbindungsflansch 14 stoßen.

In dem Endanschlag wird die noch schräg gestellte Tischplatte 3 in einer Schwenkbewegung II in Rasteingriff mit dem Frontrahmen 6 gebracht. Dabei ist die Geometrie des Einhängehakens 19 so ausgebildet, dass die Tischplatte 3 nur bei bestimmten Positionen eingeschwenkt werden kann. Hierdurch wird eine Beschädigung der Gehäuseseitenwände 7 durch den Tischplattenrand vermieden.

Der Rasteingriff der Tischplatte 3 ist in der Fig. 5 gezeigt. Daraus geht hervor, dass der Rastvorsprung 25 des Rastelements 21 die Ausnehmung 15 in dem Frontrahmen 6 hintergreift.

Damit die Tischplatte 3 zur frontseitigen Bedienblende der Geschirrspülmaschine ausgerichtet ist, sind zusätzlich zu den vorderen Rastelementen 21 als frontseitige Positionierungspunkte Positionierdorne 37 vorgesehen. Diese ragen bei lagerichtiger Positionierung in korrespondierende Fanglöcher 39 ein, die benachbart zu den Ausnehmungen 15 in der oberen Rahmenleiste des Frontrahmens 6 vorgesehen sind.

Für eine einfache Demontage der Tischplatte 3 ist das abgewinkelte Ende 26 des zweiten U-Schenkels 24 des Rastelements 21 zur Unterseite der Tischplatte 3 anzuheben. Hierzu ist der vordere Seitenrand 27 zu untergreifen und anschließend das abgewinkelte Ende 26 hochzudrücken.

Für den Fall, dass die fertig montierte Geschirrspülmaschine werksseitig mittels eines Klammerstaplers transportiert und/oder gestapelt wird, werden in der Geräte-Seitenrichtung y Klammerkräfte F_{K} auf die schmalen Randseiten 5 der Tischplatte 3 aufgebracht.

Die einander entgegen gerichteten Klammerkräfte F_{K} werden über die Befestigungspunkte 17 der Tischplatte 3 in den Behandlungsbehälter 1 eingebracht. Um ein Ausknicken der Tischplatte 3 wegen Überlasten zu vermeiden, sind die Befestigungspunkte 17 von deren schmalen Randseiten 5 in der Wirkrichtung y der Klammerkräfte F_{K} um ein Versatzmaß a nach innen versetzt. Dadurch ist entsprechend der Abstand b zwischen den Befestigungspunkten 17 derart reduziert, dass die durch die Klammerkräfte F_{K} erzeugte Druckspannung in der Tischplatte 3 kleiner ist als eine kritische Druckspannung, bei der ein Ausknicken der Tischplatte 3 erfolgt. Durch eine solche Verkürzung des Abstands, das heißt der Knicklänge, zwischen den Befestigungspunkten 17 wird die Steifigkeit der Tischplatte 3 erhöht. Dadurch erheblich größere Klammerkräfte F_{K} aufgenommen werden.

Erfindungsgemäß biegt sich die Tischplatte 3 beim Aufbringen der Klammerkräfte F_{K} nur soweit durch, bis ein Montagespiel zwischen den Rastelementen 21 und den Einhängehaken 19 sowie den Ausnehmungen 15 beseitigt ist. Nach der Beseitigung des Montagespiels wird auch der Frontrahmen 6 und der Behandlungsbehälter 1 in den Kraftpfad der Klammerkräfte einbezogen.

### Bezugszeichenliste

- 1: Behandlungsbehälter
- 3: Tischplatte
- 5: Randseite
- 7: Gehäuseseitenwand
- 9: Frontseitiger Rahmen
- 10: Deckwand
- 11: Seitenwand
- 13: Rückwand
- 14: Verbindungsflansch
- 15: Ausnehmung
- 17: Befestigungspunkt
- 19: Einhängehaken
- 21: Rastelement
- 23: U-Schenkel
- 24: U-Schenkel
- 25: Rastvorsprung
- 26: Abgewinkeltes Ende
- 26': Steg
- 27: Vorderer Seitenrand
- 29: Auflagerippe
- 33: Endanschlag
- 37: Positionierdorn
- 39: Fangloch

- a: Versatzmaß
- b: Abstand
- F_{K}: Klammerkraft
- I: Montagerichtung
- II: Montagerichtung
- y: Geräte-Seitenrichtung; Wirkrichtung

## Patentansprüche

1. Haushaltsstandgerät, insbesondere Geschirrspülmaschine, mit einem Behandlungsbehälter (1) sowie einem Kraftaufnehmerelement, welches von außen auf das Haushaltsstandgerät ausgeübte Klammerkräfte (F_{K}) in das Haushaltsstandgerät einleitet, auf dem oberseitig eine Tischplatte (3) angeordnet ist, wobei die Tischplatte (3) und/oder die Befestigung der Tischplatte (3) an dem Haushaltsstandgerät das Kraftaufnehmerelement bildend ausgeführt sind, in das die Klammerkräfte (F_{K}) einleitbar sind, und wobei die Tischplatte (3) über beabstandete Befestigungspunkte (17) auf dem Haushaltsstandgerät befestigt ist, **dadurch gekennzeichnet, dass** die Tischplatte (3) mit vorderen Befestigungspunkten (17) an einem frontseitigen Rahmen (9) des Behandlungsbehälters (1) und mit hinteren Befestigungspunkten (17) an einem zweiten Abschnitt des Behandlungsbehälters (1) angeordnet ist, und dass der Abstand (b) der Befestigungspunkte (17) auf dem Haushaltsstandgerät in einer Wirkrichtung (y) der Klammerkräfte (F_{K}) derart eingestellt ist, dass die durch die Klammerkräfte (F_{K}) erzeugte Druckspannung in der Tischplatte (3) kleiner ist als eine kritische Druckspannung, bei der ein Knicken der Tischplatte (3) in einem unelastischen Bereich erfolgt.

2. Haushaltsstandgerät nach Anspruch 1, **dadurch gekennzeichnet, dass** die Tischplatte (3) mit hinteren Befestigungspunkten (17) an einem rückseitigen Verbindungsflansch (14) zwischen einer Deckwand (9) und einer Rückwand (13) des Behandlungsbehälters (1) angeordnet ist.

3. Haushaltsstandgerät nach Anspruch 2, **dadurch gekennzeichnet, dass** die Einstellung des Abstands (b) durch eine Verlagerung der vorderen und/oder der hinteren Befestigungspunkte (17) im Wesentlichen in Wirkrichtung der Klammerkräfte (F_{K}) erfolgt.

4. Haushaltsstandgerät nach einem der vorhergehenden Ansprüche, **dadurch gekennzeichnet, dass** die Befestigungspunkte (17) der Tischplatte (3) von deren Randseiten (5) in Wirkrichtung (y) der Klammerkräfte (F_{K}) um ein Versatzmaß (a) nach innen versetzt sind.

5. Haushaltsstandgerät nach einem der vorhergehenden Ansprüche, **dadurch gekennzeichnet, dass** wenigstens ein Befestigungspunkt (17) zumindest ein Anlenkelement (19) aufweist, mit dem die Tischplatte (3) an dem Haushaltsstandgerät vorpositionierbar ist.

6. Haushaltsstandgerät nach Anspruch 5, **dadurch gekennzeichnet, dass** die Tischplatte (3) zumindest ein Rastelement (21) aufweist, das in Rasteingriff mit dem Haushaltsstandgerät bringbar ist.

7. Haushaltsstandgerät nach Anspruch 5 oder 6, **dadurch gekennzeichnet, dass** das wenigstens eine Anlenkelement (19) an einem ersten Abschnitt des Behandlungsbehälters (1), insbesondere geräterückseitig an dem Verbindungsflansch (14) des Behandlungsbehälters (1) anlenkbar ist.

8. Haushaltsstandgerät nach Anspruch 7, **dadurch gekennzeichnet, dass** das wenigstens eine Rastelement (21) mit einem zweiten Abschnitt des Behandlungsbehälters (1), insbesondere gerätefrontseitig mit dem frontseitigen Rahmen (9) des Behandlungsbehälters (1) in Rasteingriff bringbar ist.

9. Haushaltsstandgerät nach Anspruch 6 oder 7, **dadurch gekennzeichnet, dass** dem Rastelement (21) der Tischplatte (3) zumindest ein Positionierelement (37) zugeordnet ist, das in einer Gebrauchslage der Tischplatte (3) in Formschlussverbindung mit dem Haushaltsstandgerät ist.

10. Haushaltsstandgerät nach einem der vorhergehenden Ansprüche, **dadurch gekennzeichnet, dass** die Tischplatte (3) an ihrer Unterseite seitliche Auflageelemente (29) aufweist, über die die Tischplatte (3) während des Montagevorgangs des Haushaltsstandgeräts aufliegt.

11. Haushaltsstandgerät nach einem der Ansprüche 6 bis 10, **dadurch gekennzeichnet, dass** das Rastelement (21) einen Betätigungshebel (26) aufweist, bei dessen Betätigung das Rastelement (21) in eine Entriegelungsstellung bringbar ist.

12. Haushaltsstandgerät nach Anspruch 11, **dadurch gekennzeichnet, dass** der Betätigungshebel (26) des Rastelements (21) zu einer Randseite (27) der Tischplatte (3) ragt.

13. Haushaltsstandgerät nach einem der Ansprüche 5 bis 12, **dadurch gekennzeichnet, dass** die Anlenkelemente (19) und/oder die Rastelemente (21) voneinander separate Bauteile sind.

14. Haushaltsstandgerät nach einem der vorhergehenden Ansprüche, **dadurch gekennzeichnet, dass** die Tischplatte (3) Versteifungsmittel aufweist.

15. Haushaltsstandgerät nach Anspruch 14, **dadurch gekennzeichnet, dass** die Versteifungsmittel wenigstens zwischen zwei Befestigungspunkten (17) angeordnet sind, über die die Tischplatte (3) an dem Haushaltsstandgerät befestigt ist.

16. Haushaltsstandgerät nach Anspruch 14 oder 15, **dadurch gekennzeichnet, dass** das Versteifungsmittel in dem Inneren der Tischplatte (3) oder an einer Außenfläche der Tischplatte (3) angeordnet ist.

## Claims

1. Freestanding household appliance, in particular dishwasher, having a treatment container (1) and a force absorption element that introduces clamping forces (F_{K}) into the freestanding household appliance which act externally on the freestanding household appliance, on the upper side of which a counter top (3) is arranged, wherein the counter top (3) and/or the fastening of the counter top (3) to the freestanding household appliance are embodied to form the force absorption element, into which the clamping forces (F_{K}) can be introduced, and wherein the counter top (3) is fastened to the freestanding household appliance via spaced fastening points (17), **characterised in that** the counter top (3) is arranged with front fastening points (17) on a front frame (9) of the treatment container (1) and with rear fastening points (17) on a second section of the treatment container (1), and that the spacing (b) of the fastening points (17) on the freestanding household appliance is set in an effective direction (y) of the clamping forces (F_{K}) such that the compressive stress in the counter top (3) generated by the clamping forces (F_{K}) is smaller than a critical compressive stress at which a buckling of the counter top (3) occurs in an inflexible region.

2. Freestanding household appliance according to claim 1, **characterised in that** the counter top (3) is arranged with rear fastening points (17) on a rear connecting flange (14) between a top wall (9) and a rear wall (13) of the treatment container (1).

3. Freestanding household appliance according to claim 2, **characterised in that** the spacing (b) is adjusted by displacing the front and/or rear fastening points (17) substantially in the effective direction of the clamping forces (F_{K}).

4. Freestanding household appliance according to one of the preceding claims, **characterised in that** the fastening points (17) of the counter top (3) are offset inwards from their edge sides (5) in the effective direction (y) of the clamping forces (F_{K}) by an offset (a).

5. Freestanding household appliance according to one of the preceding claims, **characterised in that** at least one fastening point (17) has at least one articulation element (19), with which the counter top (3) can be pre-positioned on the freestanding household appliance.

6. Freestanding household appliance according to claim 5, **characterised in that** the counter top (3) has at least one latching element (21) which can be brought into latching engagement with the freestanding household appliance.

7. Freestanding household appliance according to claim 5 or 6, **characterised in that** the at least one articulation element (19) can be articulated on a first section of the treatment container (1), in particular on the rear side on the connecting flange (14) of the treatment container (1).

8. Freestanding household appliance according to claim 7, **characterised in that** the at least one latching element (21) can be brought into latching engagement with a second section of the treatment container (1), in particular on the front of the appliance with the front frame (9) of the treatment container (1).

9. Freestanding household appliance according to claim 6 or 7, **characterised in that** the latching element (21) of the counter top (3) is associated with at least one positioning element (37) which when the counter top (3) is in the operating position is in form-fit connection with the freestanding household appliance.

10. Freestanding household appliance according to one of the preceding claims, **characterised in that** the counter top (3) has lateral support elements (29) on its underside, via which the counter top (3) rests during the mounting process of the freestanding household appliance.

11. Freestanding household appliance according to one of claims 6 to 10, **characterised in that** the latching element (21) has an actuating lever (26), upon actuation of which the latching element (21) can be brought into an unlocking position.

12. Freestanding household appliance according to claim 11, **characterised in that** the actuating lever (26) of the latching element (21) protrudes to one peripheral side (27) of the counter top (3).

13. Freestanding household appliance according to one of claims 5 to 12, **characterised in that** the articulation elements (19) and/or the latching elements (21) are separate components from one another.

14. Freestanding household appliance according to one of the preceding claims, **characterised in that** the counter top (3) has stiffening means.

15. Freestanding household appliance according to claim 14, **characterised in that** the stiffening means are arranged at least between two fastening points (17), via which the counter top (3) is fastened to the freestanding household appliance.

16. Freestanding household appliance according to claim 14 or 15, **characterised in that** the stiffening means are arranged in the interior of the counter top (3) or on an outer surface of the counter top (3).

## Revendications

1. Appareil ménager sur pied, notamment lave-vaisselle, comprenant une cuve de traitement (1) ainsi qu'un élément capteur de force, lequel introduit dans l'appareil ménager sur pied des forces de serrage (F_{K}) exercées depuis l'extérieur sur l'appareil ménager sur pied, sur lequel un plateau (3) est disposé sur le côté supérieur, le plateau (3) et/ou la fixation du plateau (3) sur l'appareil ménager sur pied étant réalisés de manière formant l'élément capteur de force dans lequel les forces de serrage (F_{K}) peuvent être introduites, et le plateau (3) étant fixé sur l'appareil ménager sur pied par l'intermédiaire de points de fixation (17) distancés, **caractérisé en ce que** le plateau (3) est disposé sur un cadre frontal (9) de la cuve de traitement (1) à l'aide de points de fixation (17) avant et sur une deuxième section de la cuve de traitement (1) à l'aide de points de fixation (17) arrière, et **en ce que** l'écart (b) entre les points de fixation (17) sur l'appareil ménager sur pied est réglé dans une direction active (y) des forces de serrage (F_{K}) de manière à ce que la contrainte de compression générée par les forces de serrage (F_{K}) dans le plateau (3) soit inférieure à une contrainte de compression critique à laquelle une flexion du plateau (3) dans une partie non élastique a lieu.

2. Appareil ménager sur pied selon la revendication 1, **caractérisé en ce que** le plateau (3) est disposé sur une bride de liaison (14) arrière entre une paroi de plafond (9) et une paroi arrière (13) de la cuve de traitement (1) à l'aide de points de fixation (17) arrière.

3. Appareil ménager sur pied selon la revendication 2, **caractérisé en ce que** le réglage de l'écart (b) est réalisé par un déplacement des points de fixation (17) avant et/ou arrière essentiellement en direction active des forces de serrage (F_{K}).

4. Appareil ménager sur pied selon l'une quelconque des revendications précédentes, **caractérisé en ce que** les points de fixation (17) du plateau (3) sont décalés, de leurs côtés de bord (5), vers l'intérieur d'une mesure de décalage (a) en direction active (y) des forces de serrage (F_{K}).

5. Appareil ménager sur pied selon l'une quelconque des revendications précédentes, **caractérisé en ce qu'**au moins un point de fixation (17) présente au moins un élément d'articulation (19) à l'aide duquel le plateau (3) peut être pré-positionné sur l'appareil ménager sur pied.

6. Appareil ménager sur pied selon la revendication 5, **caractérisé en ce que** le plateau (3) présente au moins un élément d'encliquetage (21) qui peut être mis en prise d'encliquetage avec l'appareil ménager sur pied.

7. Appareil ménager sur pied selon la revendication 5 ou 6, **caractérisé en ce que** l'au moins un élément d'articulation (19), sur une première section de la cuve de traitement (1), notamment côté arrière de l'appareil, peut être articulé sur la bride de liaison (14) de la cuve de traitement (1).

8. Appareil ménager sur pied selon la revendication 7, **caractérisé en ce que** l'au moins un élément d'encliquetage (21), avec une deuxième section de la cuve de traitement (1), notamment côté frontal de l'appareil, peut être mis en prise d'encliquetage avec le cadre frontal (9) de la cuve de traitement (1).

9. Appareil ménager sur pied selon la revendication 6 ou 7, **caractérisé en ce qu'**au moins un élément de positionnement (37) est associé à l'élément d'encliquetage (21) du plateau (3), lequel élément de positionnement, dans une position d'utilisation du plateau (3), est en liaison avec l'appareil ménager sur pied par adhérence de forme.

10. Appareil ménager sur pied selon l'une quelconque des revendications précédentes, **caractérisé en ce que** le plateau (3) présente sur son côté inférieur des éléments d'appui (29) latéraux sur lesquels le plateau (3) repose pendant l'opération de montage de l'appareil ménager sur pied.

11. Appareil ménager sur pied selon l'une quelconque des revendications 6 à 10, **caractérisé en ce que** l'élément d'encliquetage (21) présente un levier de commande (26) lors de l'actionnement duquel l'élément d'encliquetage (21) peut être mis dans une position de déverrouillage.

12. Appareil ménager sur pied selon la revendication 11, **caractérisé en ce que** le levier de commande (26) de l'élément d'encliquetage (21) fait saillie vers un côté de bord (27) du plateau (3).

13. Appareil ménager sur pied selon l'une quelconque des revendications 5 à 12, **caractérisé en ce que** les éléments d'articulation (19) et/ou les éléments d'encliquetage (21) sont des composants séparés les uns des autres.

14. Appareil ménager sur pied selon l'une quelconque des revendications précédentes, **caractérisé en ce que** le plateau (3) présente des moyens de renforcement.

15. Appareil ménager sur pied selon la revendication 14, **caractérisé en ce que** les moyens de renforcement sont disposés au moins entre deux points de fixation (17), par l'intermédiaire desquels le plateau (3) est fixé sur l'appareil ménager sur pied.

16. Appareil ménager sur pied selon la revendication 14 ou 15, **caractérisé en ce que** le moyen de renforcement est disposé à l'intérieur du plateau (3) ou sur une surface extérieure du plateau (3).
